**Europäisches Patentamt**

**European Patent Office**

**Office européen des brevets**

(19)

(11) Veröffentlichungsnummer: **0 338 325 B1**

# EUROPÄISCHE PATENTSCHRIFT

(12)

(45) Veröffentlichungstag der Patentschrift:
16.10.91 Patentblatt 91/42

(51) Int. Cl.$^5$: **G01L 1/22**

(21) Anmeldenummer: **89105977.6**

(22) Anmeldetag: **05.04.89**

(54) **Ringtorsions-Kraftmessvorrichtung.**

(30) Priorität: **18.04.88 DE 3812860**

(43) Veröffentlichungstag der Anmeldung:
**25.10.89 Patentblatt 89/43**

(45) Bekanntmachung des Hinweises auf die
Patenterteilung:
**16.10.91 Patentblatt 91/42**

(84) Benannte Vertragsstaaten:
**DE ES FR GB IT NL**

(56) Entgegenhaltungen:
**EP-A- 0 106 900**
**DE-C- 1 268 878**
**US-A- 3 096 644**

(73) Patentinhaber: **SIEMENS
AKTIENGESELLSCHAFT
Wittelsbacherplatz 2
W-8000 München 2 (DE)**

(72) Erfinder: **Horn, Klaus, Prof.
Sanddornweg 10a
W-3300 Braunschweig (DE)**
Erfinder: **Klein, Torsten, Dipl.-Ing.
Amalienstr. 67
W-8510 Fürth (DE)**

## Beschreibung

Die Erfindung betrifft eine radialsymmetrische Kraftmeßvorrichtung nach dem Ringtorsionsprinzip.

Eine derartige Kraftmeßvorrichtung ist z.B. aus der DE-PS 1268878 bekannt. Die dortige Anordnung aus einem Verformungskörper und zwei sogenannten Rohransätzen zur Einleitung der Meßkraft und der abstützenden Gegenkraft ist im Querschnitt punktsymmetrisch zur geometrischen Mittellinie des Verformungskörpers. Die Einleitung der Meß- und der Gegenkraft erfolgt dabei jeweils in tangentialer Richtung an der inneren und äußeren Mantellinie des Verformungskörpers derart, daß die Meß- und die Gegenkraft in den Rohransätzen annähernd antiparallel zueinander verlaufen. Eine derartige Anordnung hat aber den Nachteil, daß auftretende Querkräfte bzw. Querkraftkomponenten, welche folglich senkrecht zur zentralen Radialachse der Kraftmeßvorrichtung verlaufen, ein erhebliches Drehmoment auf den Verformungskörper ausüben. Dies hat seine Ursache darin, daß aufgrund der diagonal zum Verformungskörper am Zentralteil und am Auflageteil angebrachten Rohransätze nahezu die gesamte halbe Höhe des Verformungskörpers als ein Hebelarm wirksam wird. Querkräfte bewirken folglich in der gleichen Weise wie eine Meßkraft die dem Meßprinzip zugrundeliegende sogenannte "umstülpende Bewegung" des Verformungskörpers. Sie werden somit voll von den Dehnungsmeßstreifen erfaßt und bewirken einen unerwünschten Meßfehler. Derartige Querkräfte treten auch bei einer sogenannten Ecklast auf. Hierbei handelt es sich um eine Meßkraft, welche nicht genau im Zentrum der radialen Hauptsymmetrieachse der Kraftmeßvorrichtung und möglicherweise zusätzlich schräg dazu einwirkt.

Aus der DE-OS 2555231 ist es bekannt, bei einer Kraftmeßvorrichtung der obengenannten Art zur Verringerung der Querkraftempfindlichkeit die Quersteifigkeit des gesamten Baukörpers zu vergrößern. Hierzu werden im Querschnitt kegelige Krafteinleitungsglieder verwendet, welche schräg zwischen der Krafteinleitung und dem Verformungsglied, bzw. dem Verformungsglied und der Gegenkrafteinleitung angeordnet sind. In derartig geformten Krafteinleitungsgliedern werden zwar durch Querkräfte geringere Biegespannungen hervorgerufen. Dennoch wird auch hier durch die Einleitung von Meß- und Gegenkraft an diagonal gegenüberliegenden Ecken des im Querschnitt bevorzugt parallelogrammförmigen Verformungsgliedes ein erheblicher Teil von dessen Bauhöhe als ein Hebelarm für Querkräfte wirksam.

Aus der DE-PS 3241850 ist es zur Vergrößerung der Unempfindlichkeit gegenüber Querkrafteinflüssen desweiteren bekannt, Dehnungsmeßstreifen tragende Radialstege in einer Radialebene symmetrisch zwischen einem Zentralkörper und einem Außenring anzuordnen. Auch hier wird die Quersteifigkeit des gesamten Baukörpers dadurch erhöht, daß der Zentralkörper und der Außenring an den beiden Enden jeweils über einen gemeinsamen Stützring miteinander verbunden sind. Hierdurch wird eine gegenüber Querkräften unempfindliche Parallelführung zwischen dem Zentralkörper und dem Außenring bewerkstelligt. Eine derartige Vorrichtung hat neben dem aufwendigen und aus einer Vielzahl von insbesondere durch Verschraubungen miteinander verbundenen Teilen bestehenden Aufbau insbesondere den Nachteil, daß die Genauigkeit in der Erfassung von axialen Meßspannungen gerade durch diese Stützringe erheblich beeinträchtigt wird, welche parallel zu den den eigentlichen Meßverformungskörper bildenden Radialstegen angeordnet sind.

Der Erfindung liegt die Aufgabe zugrunde, eine Ringtorsions-Kraftmeßvorrichtung anzugeben, welche bei einer niedrigen Gesamtbauhöhe aus möglichst wenigen Einzelteilen besteht und bevorzugt einstückig ausgeführt ist. Die Kraftmeßvorrichtung soll über eine hohe Meßgenauigkeit gegenüber axial einwirkenden Meßkräften und gleichzeitig über eine sehr geringe Querkraft- und Ecklastempfindlichkeit verfügen.

Die Aufgabe wird gelöst durch die Merkmale von Patentanspruch 1. Vorteilhafte Ausgestaltungen der Erfindung sind in den abhängigen Patentansprüchen angegeben.

Gegenüber dem obengenannten Stand der Technik wird bei der Erfindung ein anderer Weg zur Lösung der zugrundeliegenden Aufgabe eingeschlagen. Der Baukörper der Kraftmeßvorrichtung soll gerade nicht durch Überdimensionierung bestimmter Bereiche bzw. nicht durch Hinzufügen weiterer abstützender Einzelteile in Querrichtung versteift werden. Die Erfahrung hat gezeigt, daß durch derartige Maßnahmen in aller Regel auch die Elastizität und die Verformbarkeit des Baukörpers in axialer Richtung beeinträchtigt wird. Auf dieser axialen Auslenkbarkeit beruht aber gerade das Meßprinzip von Ringtorsions-Kraftmeßvorrichtungen. Gemäß der vorliegenden Erfindung ist der Baukörper vielmehr konstruktiv so ausgelegt, daß er auftretende Querkräfte aufnehmen und durch Verformung geeigneter Teile so kompensieren kann, daß keine Zug- und Druckbeanspruchungen auf der Verformungskörperoberfläche im Bereich der Dehnungsmeßstreifen auftreten. Mit Hilfe dem der Erfindung zugrundeliegenden Konstruktionsprinzip wird dies besonders vorteilhaft dadurch erreicht, daß Querkräfte insbesondere in Bezug auf den Drehpunkt des Verformungskörpers hebelarmfrei durch in Radialebenen direkt gegenüberliegend auftretende Quergegenkräfte aufgefangen werden. Diese Querkräfte werden mittels der erfindungsgemäßen Verbindung des einen Endes der Stegringteile mit dem Verformungskörper in einer Radialebene und des anderen Endes der Stegringteile mit dem Auflage- und dem Stützteil in einer anderen Radialebene in gegenläufige Biegungen der beiden Stegringteile umgesetzt. Der eigentliche Verformungskörper bleibt somit vollständig in Ruhe und bei entsprechender Länge der Stegringteile frei von Zug- und Druckbeanspruchungen im Bereich der Dehnungsmeßstreifen. Es ist ein besonderer Vorteil der Erfindung, daß trotz hoher Querkraftunempfindlichkeit die Elastizität des gesamten Baukörpers in axialer Richtung, und somit die Meßgenauigkeit der Kraftmeßvorrichtung voll erhalten bleibt.

Die Erfindung und deren Vorteile werden desweiteren anhand der nachfolgend kurz angeführten Figuren weiter erläutert. Dabei zeigt :

FIG 1    eine Ausführungsform der Erfindung, bei der die Meßkraft vor Einleitung in den Verformungsteil zweimal umgelenkt wird,

FIG 2    eine weitere Ausführungsform der Kraftmeßvorrichtung von FIG 1 mit einem im Querschnitt näherungsweise sechseckigen Verformungskörper,

FIG 3    eine weitere Ausführungsform der Erfindung, bei der die Meßkraft vor Einleitung in den Verformungsteil einmal umgelenkt wird, und

FIG 4    eine weitere Ausführungsform der Kraftmeßvorrichtung von FIG 3 mit einem im Querschnitt hufeisenförmigen Verformungskörper.

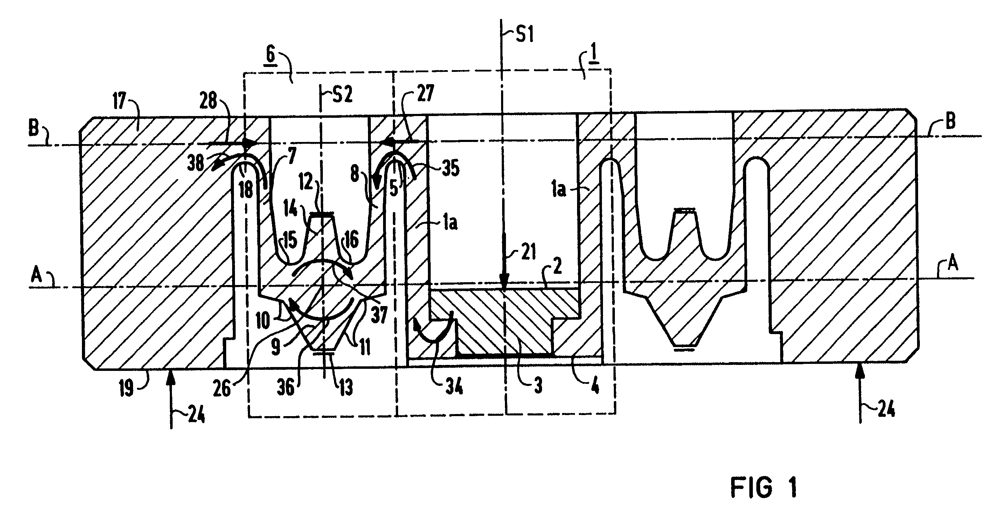

In der FIG 1 ist ein vorteilhafte Ausführungsform der erfindungsgemäßen radialsymmetrischen Kraftmeßvorrichtung dargestellt, welche im wesentlichen aus drei Hauptteilen besteht. Dies sind zum einen ein Auflageteil 1, welches als ein Aufnehmer für die von außen zugeführte Meßkraft dient und diese an die weiteren Teile der Kraftmeßvorrichtung weiterleitet. Weiterhin dient ein Stützteil 17 zur Lagerung der gesamten Kraftmeßvorrichtung auf einem die abstützenden Gegenkräfte aufbringenden Untergrund. Das Auflage- und das Stützteil sind schließlich durch ein als eigentliches Meßelement dienendes Verformungsteil 6 miteinander verbunden. Alle Hauptteile sind ringförmig und somit radialsymmetrisch zu einer im Zentrum der Kraftmeßvorrichtung liegenden Hauptsymmetrieachse S1. Bei der in der FIG 1 dargestellten Ausführungsform bildet das Auflageteil das Zentrum der Kraftmeßvorrichtung, und steht über das umgebende Verformungsteil 6 mit dem als äußere Begrenzung dienenden Stützteil 17 in Verbindung. So wird der Kraftvorrichtung von FIG 1 eine Meßkraft 21 möglichst in der Hauptsymmetrieachse S1 liegend über das Auflageteil 1 zugeführt. Die hierdurch in und auf dem Verformungsteil 6 insbesondere durch Verdrehung hervorgerufenen Zug- und Druckspannungen werden auf dessen Oberfläche mittels Dehnungsmeßstreifen in elektrische Meßsignale umgesetzt. Zur Abstützung müssen schließlich der Kraftmeßvorrichtung Gegenkräfte 24 über das Stützteil zugeführt werden. Aufgrund des der erfindungsgemäßen Kraftmeßvorrichtung zugrundeliegenden Ringtorsionsmeßprinzips ist es auch möglich, die Eingriffsrichtungen für die Meßkraft 21 und die abstützenden Gegenkräfte 24 umzudrehen. In diesem Fall würde dann das Auflageteil mit einer zugförmigen Meßkraft belastet werden, welche bevorzugt mittels auf der gegenüberliegenden Seite des Stützteils 17 angreifenden Gegenkräften abgestützt wird. In einer anderen Ausführungsform ist es ferner möglich, die Funktion von Auflage- und Stützteil miteinander zu vertauschen. Die Meßkraft würde dann auf den äußeren Ring des Stützteils 17 einwirken, während das Auflageteil 1 im Zentrum zur Abstützung der Kraftmeßvorrichtung auf einem Untergrund dient.

In der in der FIG 1 dargestellten speziellen Ausführungsform der Erfindung wird die Meßkraft 21 dem Auflageteil 1 als eine Druckkraft über die Kraftauflagefläche 2 eines tellerförmigen Auflagepodestes 3 zugeführt. Dieses Auflagepodest bildet den Grund eines Aufnahmezylinders 1a. Die druckförmige Meßkraft 21 wird dabei zunächst in eine Zugkraft umgelenkt. Diese verläuft in der speziellen Ausführungsform von FIG 1 in den Wänden des Aufnahmezylinders, was im linken Teil der FIG 1 durch einen Kraftflußpfeil 34 angedeutet ist. Selbstverständlich kann das gesamte Auflageteil 1 auch einstückig ausgeführt sein, so daß in diesem Fall der Boden des Aufnahmezylinders als ein Auflagepodest wirksam wird. In der in der FIG 1 dargestellten Ausführungsform wird die in den Wänden des Aufnahmezylinders 1a als Zugkraft auftretende Meßkraft an dessen oberen Ende zur Einleitung in das als Meßelement dienende Verformungsteil 6 erneut umgelenkt, was durch einen weiteren Kraftflußpfeil 35 angedeutet ist.

Das Verformungsteil 6 besteht aus einem inneren bzw. äußeren Stegringteil 8 bzw. 7 und einem dazwischen angeordneten Verformungskörper 9. Gemäß der Erfindung stehen diese Stegringteile 7, 8 mit dem Auflageteil 1, dem Verformungskörper 9 und dem Stützteil 17 auf besondere Weise in Verbindung. Dabei liegen zum einen die Verbindungspunkte mit dem Auflage- und dem Stützteil an dem einen Ende der beiden Stegringteile in einer Radialebene B-B zur Hauptsymmetrieachse S1. Desweiteren liegen gemäß der Erfindung die Verbindungspunkte mit den Flanken des Verformungskörpers 9 am anderen Ende der beiden Stegringteile in einer weiteren Radialebene A-A zur Hauptsymmetrieachse S1. Es ergibt sich somit ein Kraftflußverlauf, welcher in FIG 1 durch die Kraftpfeile 34, 35, 36, 37 und 38 angedeutet ist. Gemäß dem bekannten Ringtorsionsmeßprinzip wird der Verformungskörper 9 durch die Einwirkung der Meßkraft 21 einer "Drehung" unterworfen. Die hierdurch insbesondere an dessen Oberfläche auftretenden Zug- und Druckspannungen werden über Dehnungsmeßstreifen 12 bzw. 13 in bekannter Weise in elektrische Meßsignale umgesetzt und nicht dargestellten elektrischen Auswerteschaltungen, z.B. Wheatstoneschen Brückenschaltungen, zugeführt. Der Verformungskörper 9 wird in seiner Querschnittsgestaltung und Dimensionierung besonders vorteilhaft so ausgelegt, daß sein geometrischer Mittelpunkt 26, welcher sich durch identische Abstände von den die Dehnungsmeßstreifen 12 und 13 tragenden Oberflächen auszeichnet, sowohl annähernd dem Drehpunkt als auch dem Punkt entspricht, bei dem im Verformungskörper die Beträge der auftretenden Zug- und Druckspannungen gleich sind.

Die erfindungsgemäße Kraftmeßvorrichtung ermöglicht besonders vorteilhaft eine nahezu vollständige Kompensation von unerwünschten Querkräften. Dies hat seine Ursache darin, daß die Querkraftein- und Ausleitpunkte an den Enden der beiden Stegringteile, d.h. an den Verbindungspunkten mit dem Auflage- und dem Stützteil bzw. dem Verformungskörper unmittelbar in je einer Radialebene B-B bzw. A-A gegenüberliegen. Eine in der FIG 1 beispielhaft dargestellte Querkraftkomponente 27 ruft somit unmittelbar gegenüberliegend eine Gegenkraftkomponente 28 hervor. Beide Kräfte verursachen kein auf den Verformungskörper einwirkendes Drehmoment, da aufgrund ihrer gemeinsamen Lage in der Ebene B-B kein wirksamer Hebelarm auftritt. Das gleiche läßt sich an den Übergangsstellen von den Stegringteilen 8 und 7 zum Verformungskörper 9 in der Radialebene A-A zeigen. Querkräfte werden somit in gegenläufige, d.h. aufeinander zulaufende, bzw. voneinander weglaufende Verbiegungen der Stegringteile 7 und 8 umgesetzt. Da somit der Verformungskörper beim Auftreten von Querkräften in Ruhe bleibt, können auch keine Zug- bzw. Druckspannungen auf der Oberfläche erzeugt werden, welche ansonsten über Dehnungsmeßstreifen 12 bzw. 13 in das Meßergebnis eingehen und dieses verfälschen würden.

Aufgrund der erfindungsgemäßen Querkraftkompensation ist es nun nicht mehr notwendig, ringförmig geschlossene Dehnungsmeßstreifen in Form von Drahtringen auf den gesamten Flächen 12 und 13 anzubringen. Derartige, die gesamte Hauptsymmetrieachse S1 kreisförmig auflaufende Dehnungsmeßstreifen würden zur integralen Kompensation von durch Querkräfte hervorgerufenen Zug- bzw. Druckspannungen benötigt werden. Bei der erfindungsgemäßen Kraftmeßvorrichtung dagegen ist es vielmehr ausreichend, einfache Dehnungsmeßstreifen möglichst gleichmäßig auf dem Umfang verteilt vereinzelt auf den ringförmigen Flächen 12 und 13 anzubringen.

In der speziellen Ausführungsform der Erfindung gemäß der Darstellung von FIG 1 verlaufen die beiden Stegringteile 7 und 8 nahezu senkrecht zueinander und annähernd parallel zur Hauptsymmetrieachse S1. Dies hat den besonderen Vorteil, daß bei Eingriff der Meßkraft 21 zum Großteil nur Zug- und Druckkräfte und nur geringe Biegekräfte in den Stegringteilen 7 und 8 auftreten. Die Meßkraft und die dazugehörige Gegenkraft verlaufen somit in den Stegringteilen annähernd antiparallel zueinander. In einer anderen Ausführungsform ist auch möglich, daß die Stegringteile relativ zur Hauptsymmetrieachse S1 schräg verlaufen, bzw. auch schräg zueinander, z.B. w-förmig. Das Verformungsteil 1 der speziellen Ausführungsform von FIG 1 zeichnet sich zudem dadurch aus, daß es annähernd spiegelsymmetrisch zu einer durch die geometrische Mittellinie 26 verlaufenden Nebensymmetrieachse S2 verläuft. In einer anderen, nicht dargestellten Ausführungsform kann es auch vorteilhaft sein, insbesondere zur "Einstellung" der im Verformungskörper 9 auftretenden Zug- und Druckspannungsverläufe, eine im Querschnitt nicht spiegelsymmetriesche Anordnung aus den Stegringteilen und dem Verformungskörper vorzusehen.

Der im Ausführungsbeispiel der FIG 1 dargestellte Verformungskörper 9 zeichnet sich in seinem Querschnitt desweiteren dadurch aus, daß die Flächen 10 bzw. 11 auf der Oberseite, welche den Übergang zwischen den Verbindungspunkten der Stegringteile in der Ebene A-A und der Drehungsmeßstreifen tragenden Fläche 13 bilden, gekerbt sind. Ferner liegt die Dehnungsmeßstreifen tragende Fläche 12 auf einem sogenannten Zapfenring 14, welcher vom Kern des Verformungskörpers in den Raum zwischen die beiden Stegringteile 7 und 8 hervorspringt. Es ergibt sich somit je ein Kerbgrund 15 bzw. 16 zwischen dem äußeren Stegringteil 7 und dem Zapfenring 14 bzw. dem Zapfenring 14 und dem inneren Stegringteil 8. Mit Hilfe einer derartigen Querschnittsgestaltung des Verformungskörpers 9 lassen sich besonders vorteilhaft die beim Eingriff einer Meßkraft 21 auftretenden Zug- und Druckspannungsverläufe z.B. im Hinblick auf deren Linearität "einstellen".

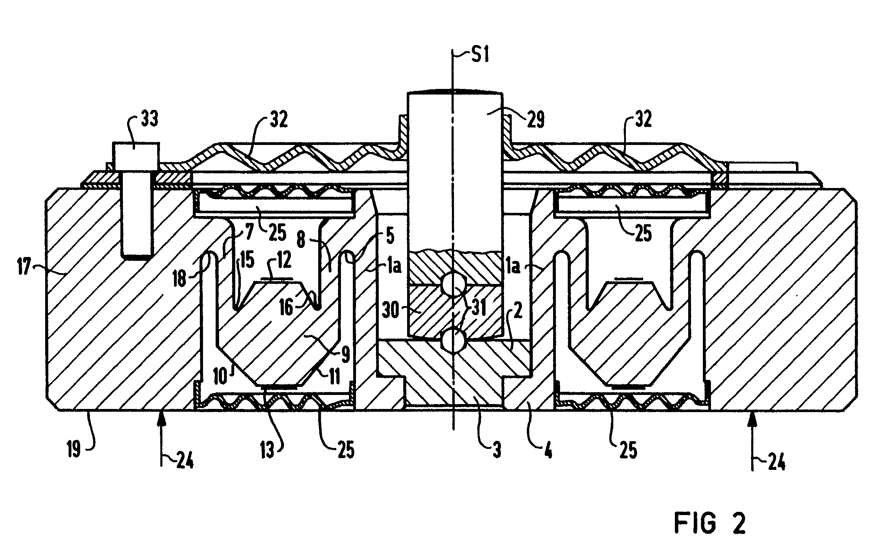

Für den Verformungskörper sind auch andere Querschnittsformen denkbar, z.B. kreisförmige. So hat der Verformungskörper 9 in der in der FIG 2 dargestellten Ausführungsform der erfindungsgemäßen Kraftmeßvorrichtung einen sechseckförmigen Querschnitt. Die Übergänge zwischen den Stegringteilen 7 bzw. 8 und der Dehnungsmeßstreifen tragenden Fläche 13 werden in diesem Fall durch Schrägflächen 10 bzw. 11 gebildet. Ferner hat der Kerbgrund 15 bzw. 16 keinen nennenswerten Krümmungsradius mehr und ist annähernd spitz zulaufend. Auch mit einem derartig gestalteten Verformungskörper läßt sich bei Eingriff einer Meßkraft 21 ein annähernd gleichmäßiges und lineares Auftreten von Zug- und Druckspannungen insbesondere auf der Verformungskörperoberfläche erreichen.

Die in den FIG 1 und 2 dargestellten Ausführungsformen der Erfindung zeichnen sich durch doppelte Kraftumlenkung zwischen der Meßkrafteinleitung im Auflageteil 1 und der Meßkraftauswertung im Verformungsteil 6 aus. Dies ermöglicht eine besonders niedrige und kompakte Bauform der Kraftmeßvorrichtung. So steht insbesondere der Verformungskörper 9 des Verformungsteiles 6 nicht über das Auflageteil 1 und das Stützteil 17 hinaus, sondern wird von beiden vollständig umfaßt. Hierdurch ist es möglich, auf besonders einfache Weise, insbesondere mittels flacher ringförmiger Abdeckungen 25, die Dehnungsmeßstreifen tragenden Teile der Kraftmeßvorrichtung feuchtigkeits- und staubdicht abzuschließen. Die erfindungsgemäße Bauform der Kraftmeßvorrichtung hat desweiteren den besonderen Vorteil, daß die Meßkraft, insbesondere über die Kraftaufnahmefläche 2, in das Innere des Aufnahmeteils 1 eingeleitet wird. Hierzu dient in der Regel ein Krafteinleitstempel 29, welcher in der Ausführungsform der FIG 2 vorteilhaft über einen zusätzlichen Stempeluntersatz 30 und dazwischen befindliche Arretierelemente, insbesondere Arretierkugeln 31, mit dem Auflagepodest 3 in Verbindung steht. Da der Stempel somit zum Großteil im Inneren der Kraftmeßvorrichtung liegt, ist es auf besonders einfache Weise möglich, diesen mit Hilfe weiterer, feuchtigkeits- und staubdichter Abdeckungen, z.B. einem biegeelastischen Faltenbalg 32, gegen Verkippen und Herausfallen zu sichern. Dieser ist auf der Oberfläche der Kraftmeßvorrichtung z.B. mittels Schraubverbindungen 33 befestigt. Es sind somit keine aufwendigen, außerhalb der Kraftmeßvorrichtung liegenden Krafteinleitsysteme und Mittel zur Lagerung und Arretierung des Meßkrafteinleitstempels mehr notwendig.

Die erfindungsgemäße Bauform der Kraftmeßvorrichtung kennzeichnet sich weiter dadurch aus, daß die kreisförmige Unterseite 4 des Auflageteiles 1 und die ringförmige Unterseite 19 des Stützteiles 17 annähernd in einer Ebene liegen. Es ist somit auf besonders einfache Weise möglich, einen als Überlastschutz dienenden Anschlag für das Auflageteil 1 dadurch zu erzeugen, indem Paßringe gewünschter Stärke zwischen die Unterlage und die Fläche 19 gelegt werden. Die Anschlageinstellung kann somit vorteilhaft außerhalb der Kraftmeßvorrichtung durchgeführt werden. Es sind keinerlei Eingriffe in das Innere der insbesondere über die Abdeckungen 25 bzw. 32 feuchtigkeits- und staubdicht abgeschlossen Kraftmeßzelle mehr notwendig.

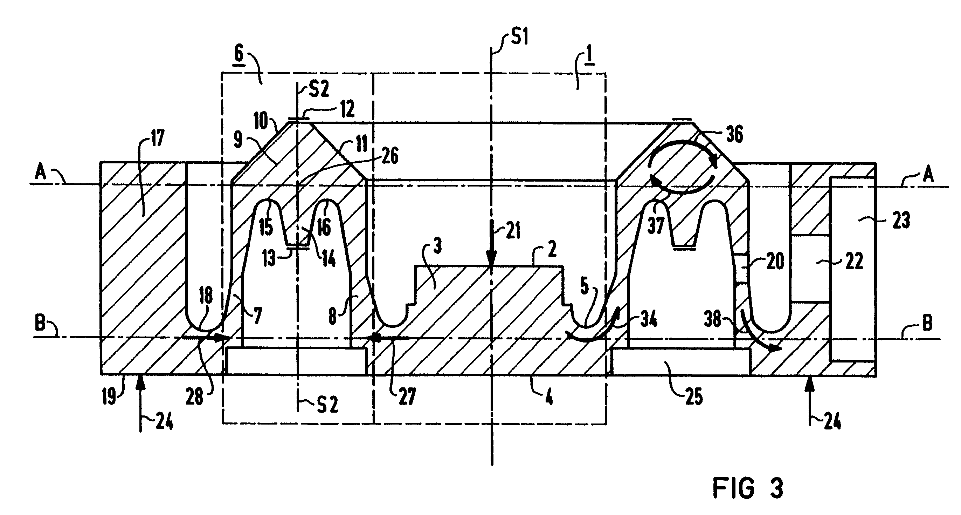

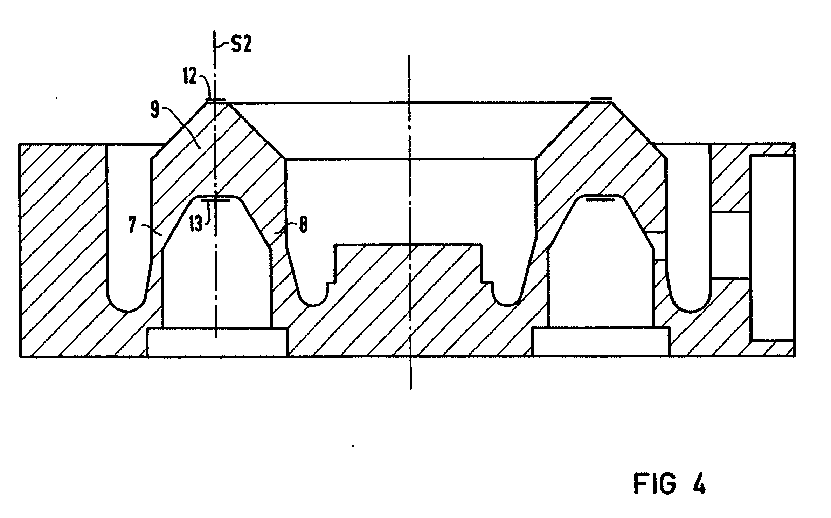

In den FIG 3 und 4 sind weitere vorteilhafte Ausführungsformen der Erfindung dargestellt. Diese zeichnen sich besonders dadurch aus, daß die in das Auflagepodest 3 des Auflageteils 1 eingeleitete Meßkraft 21 nur einmal umgelenkt direkt in das innere Stegringteil 8 eingeleitet wird. In der FIG 3 ist dies durch den Kraftpfeil 34 beispielhaft angedeutet. Hierdurch wird eine einfachere und somit fertigungstechnisch günstigere Gestaltung des gesamten Baukörpers der erfindungsgemäßen Kraftmeßvorrichtung erreicht. Insbesondere kann der ursprünglich zur zweifachen Kraftumlenkung dienende Aufnahmezylinder 1a entfallen. Der innere Ringgrund 5 ist somit besser zugänglich, während er in den Ausführungsformen der FIG 1 und 2 einen engen, tiefen Spalt zwischen den Wänden des Aufnahmezylinders 1a und dem inneren Stegringteil 8 bildete. Ferner kann durch den Wegfall der doppelten Kraftumlenkung auch der äußere Ringgrund 18 zwischen dem äußeren Stegringteil 7 und dem Stützteil 17 im Gegensatz zu den Ausführungen in den FIG 1 und 2 erheblich weiter und somit fertigungstechnisch günstiger gestaltet werden. In der Ausführungsform der FIG 3 ist das Auflageteil 1 besonders vorteilhaft einstückig ausgeführt, wobei das Auflagepodest 3 ein integrierter Bestandteil des gesamten Auflageteils 1 ist. In der Schnittdarstellung von FIG 3 sind desweiteren beispielhaft Bohrungen 20, 22 und 23 im äußeren Stegringteil 7 und im Stützteil 17 dargestellt. Diese dienen in bekannter Weise zur Aufnahme von Kabeln zum Anschluß der Dehnungsmeßstreifen und deren zugfester Ableitung aus der Kraftmeßvorrichtung.

In der FIG 4 ist eine weitere Ausführungsform der Kraftmeßvorrichtung von FIG 3 dargestellt, bei welcher der Verformungskörper 9 einen hufeisenförmigen Querschnitt hat. Durch den Wegfall des Zapfenringes 14 und des dadurch bedingten äußeren Kerbgrundes 15 bzw. des inneren Kerbgrundes 16 wird eine weitere vorteilhafte, insbesondere fertigungstechnisch günstige Gestaltung des Baukörpers erreicht.

## Patentansprüche

1. Radialsymmetrische Kraftmeßvorrichtung nach dem Ringtorsionsprinzip, mit

a) einem Auflageteil (1), dem die Meßkraft (21) von außen, insbesondere über einen Stempel (29, 30), zugeführt wird,

b) einem Stützteil (17) zur Lagerung der Kraftmeßvorrichtung auf einem die abstützende Gegenkraft (24) aufbringenden Untergrund,

c) einem ringförmigen Verformungskörper (9) zwischen dem Auflageteil (1) und dem Stützteil (17), welcher aufgrund der Meßkrafteinwirkung (S1, 21) verdreht wird,

d) Dehnungsmeßstreifen (12, 13), welche auf der Oberfläche des Verformungskörpers (9) angebracht sind und die durch die Meßkrafteinwirkung (S1, 21) hervorgerufenen Zug- und Druckkräfte in elektrische Meßsignale umsetzen,

e) einem ersten Stegringteil (8) zur Verbindung des Auflageteiles (1) mit der einen Flanke (11) des Verformungskörpers (9), und

f) einem zweiten Stegringteil (7) zur Verbindung des Stützteiles (17) mit der anderen Flanke (10) des Verformungskörpers (9), wobei

g) das erste bzw. zweite Stegringteil (8, 7) so mit der einen bzw. anderen Flanke (11, 10) des Verformungskörpers (9) und dem Auflage- bzw. Stützteil (1, 17) in Verbindung steht, daß die Angriffspunkte an den Flanken des Verformungskörpers (9) und die Angriffspunkte am Auflage- bzw. Stützteil annähernd in je einer Ebene (A-A, B-B) senkrecht zur Eingriffsrichtung (S1) der Meßkraft (21) liegen.

2. Vorrichtung nach Anspruch 1, **dadurch gekennzeichnet,** daß das erste und zweite Stegringteil (8, 7) zwischen den Angriffspunkten an der einen bzw. anderen Flanke (11, 10) des Verformungskörpers (9) und am Auflage- bzw. Stützteil (1, 7) annähernd parallel zueinander verlaufen.

3. Vorrichtung nach Anspruch 1 oder 2, **dadurch gekennzeichnet,** daß das Verformungsteil (1) aus dem ersten und zweiten Stegringteil (8, 7) und dem dazwischenliegenden Verformungskörper (9) im Schnitt spiegelsymmetrisch ist zu einer Nebensymmetrieachse (S2), welche parallel zur radialsymmetrischen Hauptsymmetrieachse (S1) verläuft.

4. Vorrichtung nach einem der vorangegangenen Ansprüche, **gekennzeichnet** durch einen vom Verformungskörper (9) in den Raum zwischen dem ersten und zweiten Stegringteil (8, 7) hervorspringenden Zapfenring (14) als Träger von Dehnungsmeßstreifen.

## Claims

1. A radially symmetrical force measuring device according to the ring torsion principle with

a) a bearing part (1) to which is supplied the measuring force (21) from outside, in particular by way of a punch (29, 30),

b) a supporting part (17) for bearing the force measuring device on a foundation applying the supporting counteracting force (24),

c) an annular deformation body (9) between the bearing part (1) and a supporting part (17), which is twisted because of the measuring force effect (S1, 21),

d) wire strain gauges (9) which are attached to the surface of the deformation body (9) and which convert the tensile and compressive forces into electric measuring signals, caused by the measuring force effect (S1, 21),

e) a first bar ring part (8) for connecting the bearing part (1) to the one flank (11) of the deformation body (9), and

f) a second bar ring part (7) for connecting the supporting part (17) with the other flank (10) of the deformation body (9), wherein

g) the first or second bar ring part (8, 7) is connected to one or the other flank (11, 10) of the deformation body (9) and the bearing or supporting part (1, 17), so that the points of application on the flanks of the deformation body (9) and the points of application on the bearing or supporting part lie approximately in one plane (A-A, B-B), perpendicular to the engaging direction (S1) of the measuring force (21).

2. A device according to claim 1, characterised in that the first and second bar ring parts (8, 7) extend approximately parallel to each other between the points of application on the one or other flank (11, 10) of the deformation body (9) and on the bearing or supporting part (1, 17).

3. A device according to claim 1 or 2, characterised in that the deformation part (1) of the first and second bar ring parts (8, 7) and the deformation body (9) lying therebetween is mirror-symmetric in section to a subsidiary axis of symmetry (S2), which extends parallel to the radially symmetric main axis of symmetry (S1).

4. A device according to one of the preceding claims, characterised by a pivot ring (14), projecting from the deformation body (9) into the space between the first and second bar ring parts (8, 7), as a carrier for wire strain gauges.

## Revendications

1. Dispositif de mesure de force à symétrie radiale fonctionnant selon le principe de la torsion d'un anneau, comportant

a) une partie d'application (1), à laquelle la force de mesure (21) est appliquée de l'extérieur, notamment par l'intermédiaire d'un poinçon (29, 30),

b) une partie de support (17) destinée à supporter le dispositif de mesure de force sur un support appliquant la force antagoniste de support (24),

c) un corps déformable (9) en forme d'anneau disposé entre la partie d'application (1) et la partie de support (17) et qui subit une torsion sous l'effet de l'action (S1, 21) de la force de mesure,

d) des jauges extensométriques (12, 13), qui sont disposées sur la surface du corps déformable (9) et convertissent les forces de traction et de compression, provoquées par l'action (S1, 21) de la force de mesure, en des signaux électriques de mesure,

e) une première partie en forme de barrette annulaire (8) servant à raccorder la partie d'application (1) à un flanc (11) du corps déformable (9), et

f) une seconde partie en forme de barrette annulaire (7) servant à raccorder la partie de support (17) à l'autre flanc (10) du corps déformable (9),

g) les première et seconde parties en forme de barrettes annulaires (8, 7) étant raccordées à l'un ou à l'autre flanc (11, 10) du corps déformable (9) et à la partie d'application et à la partie de support (1, 17) de telle sorte que les points d'attaque au niveau des flancs du corps déformable (9) et les points d'attaque au niveau de la partie d'application et de la partie de support sont situés approximativement dans un plan respectif (A-A, B-B) perpendiculaire à la direction (S1) d'action de la force de mesure (21).

2. Dispositif suivant la revendication 1, caractérisé par le fait que les première et seconde parties en forme de barrettes annulaires (8, 7) s'étendent, en étant approximativement parallèles entre elles, entre les points d'attaque sur l'un ou l'autre flanc (11, 10) du corps déformable (9) et sur la partie d'application ou la partie de support (1, 17).

3. Dispositif suivant la revendication 1 ou 2, caractérisé par le fait que la partie déformable (1) est formée par les première et seconde parties en forme de barrettes annulaires (8, 7) et le corps déformable intercalé (9) possède, en coupe, une symétrie par rapport à un axe secondaire de symétrie (S2) qui est parallèle à l'axe principal de symétrie radiale (S1).

4. Dispositif suivant l'une des revendications précédentes, caractérisé par un embout annulaire (14) qui est disposé en saillie entre les première et seconde parties en forme de barrettes annulaires (8, 7), en tant que support de jauges extensométriques.

FIG 1

EP 0 338 325 B1

FIG 2

EP 0 338 325 B1

FIG 3

EP 0 338 325 B1

FIG 4

EP 0 338 325 B1